Europäisches Patentamt

European Patent Office

Office européen des brevets

(11) Publication number: **0 397 230 A2**

# EUROPEAN PATENT APPLICATION

(21) Application number: **90201009.9**

(22) Date of filing: **23.04.90**

(51) Int. Cl.5: **F16J 15/02**

(30) Priority: **04.05.89 GB 8910273**

(43) Date of publication of application:
**14.11.90 Bulletin 90/46**

(84) Designated Contracting States:
**AT BE CH DE DK ES FR GB GR IT LI LU NL SE**

(71) Applicant: **CURTY SA**
**25 rue Aristide-Briand - BP 316**
**F-69800 Saint-Priest, Lyon(FR)**

(72) Inventor: **Lachal, Jean Eric**
**La Chanteraie**
**F-38640 Claix(FR)**

(74) Representative: **Crux, John Anthony**
**Bowdon House Ashburton Road West**
**Trafford Park**
**Manchester M17 1RA(GB)**

(54) **Gaskets.**

(57) A gasket suitable for use in an automobile engine water pump or cylinder head is of elastomeric material. It includes apertures to receive clamping bolts and has its inner and outer circumferential zones each provided with a ridge, the ridges being integral with and of the same material as the body of the gasket and enclosing the bolt apertures between them.

The gasket is more durable in storage, especially in wet conditions, than the gaskets of paper which are commonly used under compression by bolts passing through their apertures. Additionally their sealing capacity is relatively uniform along their length, and not heavily dependent on closeness to the bolts by means of which they are compressed when in use.

## Gaskets

This invention relates to gaskets, and more particularly to flat gaskets which include apertures to receive clamping bolts, for example, gaskets for automobile engine water pumps, inlet manifolds, sumps, cylinder heads and the like.

It is known to produce gaskets of the kind just referred to from various kinds of paper and also from predominantly fibre-filled rubber compositions. The present invention is concerned amongst other things with providing gaskets which are more durable in storage, particularly under conditions where they may get wet. It is also concerned with improved sealing performance. It further relates to a method of manufacturing gaskets.

It is well-known that gaskets which form part of a bolted connection usually develop leakage between the securing bolts, rather than in the vicinity of the bolts. This is usually due to irregular distribution of the clamping pressure, the highest clamping loads being achieved close to the bolts. Distortion of the hardware components connected by the gasket is another factor leading to irregular pressure loading, and subsequent leakage.

Numerous proposals for dealing with these problems are known. For example, it is common practice to apply a strip of an elastomeric sealing material such as silicon rubber, using a printing process. It has also been proposed to create local deformations in the form of corrugations.

It is an object of the present invention to provide an improved gasket and method of manufacturing it.

According to the invention, there is provided a flat gasket of elastomeric material, which includes apertures to receive clamping bolts and has inner and outer circumferential zones each provided with at least one surface ridge, the ridges being integral with, and of the same material as the body of the gasket and disposed to enclose the bolt apertures between them.

The gasket may also include a third ridge having the structural features already defined and being situated between the other two ridges so as to be on the inner side of the bolt apertures.

The ridges may be formed on both sides of the gasket.

Preferably each ridge has a width which decreases with height above the plane of the gasket. Such ridges are conveniently of generally triangular cross-section, though the apex of the triangle may be rounded.

The gaskets are preferably made by injection moulding from an elastomer composition. A thermoplastic elastomer is particularly preferred. The latter may include up to about 10% by weight of glass fibres, for reinforcement.

It will be appreciated that in order to more precisely control gasket loading pressure, the ridge width and/or height may be varied lengthwise of the ridge, so that in use the sealing pressure developed will reflect local requirements. This is particularly convenient to achieve by the preferred method of manufacture.

Gaskets in accordance with the invention can readily be designed to have a sealing capacity which is relatively uniform over their length and not, as with paper gaskets, heavily dependent on closeness to the bolts by means of which they are compressed when in use.

A further advantage over conventional gaskets, which are usually made by cutting or punching operations from sheets, is that waste is virtually eliminated. Hitherto the conventional manufacturing techniques inevitably resulted in substantial amounts of waste material that was incapable of being recycled.

The invention will now be further described with reference to the accompanying drawings, in which:

Figure 1 is a plan, partly diagrammatic, of a gasket suitable for use as an automobile engine water pump gasket; and

Figure 2 is a vertical section on line A-A of Figure 1 but shown on a greatly enlarged scale.

Figure 3 is a cross-section similar to Figure 2 but illustrating a different embodiment of the invention, and

Figure 4 is a cross-section similar to that of Figure 2, but this time on lines B-B of the embodiment of Figure 3.

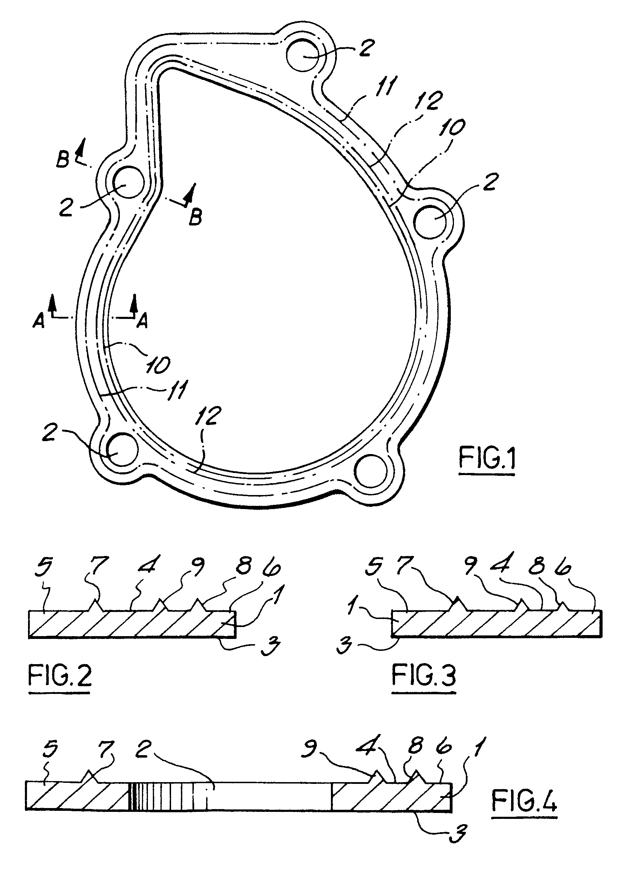

Referring firstly to Figures 1 and 2, a flat gasket injection-moulded from the thermoplastic elastomeric material sold by Du Pont de Nemours (France) SA under the name HYTREL (a material with good elastic recovery), has a body 1 which includes bolt apertures 2 and whose lower surface 3 is planar. On the upper surface 4 of the gasket the inner and outer circumferential zones, 5 and 6 respectively, are each provided with a ridge, 7 and 8 respectively. The ridges are integral with the body 1. It will be noted that the ridges are relatively small, their proportions in figure 2 being exaggerated for the purposes of illustration.

As shown in Figure 2, the section on line A-A, the ridges have a width which decreases with height above the plane of the gasket. They are here shown as of triangular cross-section. In Figure 1, only the ridge crests are shown, being represented by broken lines 10 and 11. The ridges enclose the bolt apertures 2 between them. There is a third ridge, 9 (Figure 2), also integral with and of the same material as body 1, situated between ridges 7 and 8 so as to be on the inner side of the bolt apertures 2A, as indicated by the broken line 12, representing the ridge crest, in Figure 1.

The ridge crests 10, 11 and 12 need not have the pointed cross-sections shown in Figures 2-4, and can equally well be rounded.

Referrine now to Figures 1 , 3 and 4, a slightly different embodiment of the invention is shown. The overall plan view is the same, but the relative height of the ridges is changed to reflect the sealing pressure needed in various locations. Thus in Figure 3, a typical profile needed to develop a seal intermediate the bolt apertures 2 of Figure 1 is shown. The ridges 11, 12 and 10 are made larger, to reflect the lower bolt loadings in the vicinity of line A-A. Also, they are of different heights, to reflect the need for selective pressure control if a sensibly uniform sealing performance lengthways and widthways of the gasket is to be achieved.

In Figure 4, typical profiles in the immediate vicinity of the bolt apertures are shown. Lower sealing pressures are needed, because of the proximity to the bolts, which apply heavy, localised pressure. It will be appreciated that the ridge profiles will vary progressively over the length of the gasket, from the configuration of figures 3 to that of figure 4, and back again, between successive bolt apertures. It will also be appreciated that the exact configuration of the ridges can be generated very accurately in the moulding process, thereby eliminating at least some of the variability which results from conventional manufacturing processes.

## EXAMPLE

A gasket corresponding to Figure 1 was injection moulded from HYTREL (trade mark) thermoplastic elastomer. The ridges were of the thickness of the gasket and its average width, the ridges were very small indeed. In use, as a water pump gasket, there was no leakage after over 250 hours of a thermal cycle test (alternating hot and cold conditions). The torque loss measured at the retaining bolts was around 30 - 40 %. This was similar to a fibre-based gasket, but there was no leakage. Unlike the conventional fibre gasket, the gasket according to the invention could be re-used.

## Claims

1. A flat gasket of elastomeric material, which includes apertures to receive clamping bolts, characterised in that its inner and outer circumferential zones are each provided with a ridge, the ridges being integral with and of the same material as the gasket and disposed to enclose the bolt apertures between them.

2. A gasket according to claim 1, further characterised by the inclusion of a third ridge having the structural features defined in claim 1, and situated between the other two ridges so as to be on the inner side of the bolt apertures.

3. A gasket according to claim 2, further characterised by the inclusion of at least one other ridge having the structural features of claim 1, and situated between the first two ridges so as to be on the outer side of the bolt apertures.

4. A gasket according to claim 1,2 or 3 characterised in that each ridge has a width which decreases with height above the plane of the gasket.

5. A gasket according to claim 4, characterised in that the ridges are of generally triangular cross-section.

6. A gasket according to any of claims 1 to 5, characterised in that the elastomeric material is a thermoplastic elastomer

7. A gasket according to any of claims 1 to 6 further characterised in that it comprises up to about 10% by weight of glass fibres.

8. A gasket according to any preceding claim characterised in that it is made by an injection moulding process.

9. A gasket according to any preceding claim characterised in that the ridges are of different heights relative to the plane of the gasket.

10. A gasket according to any of claims 1 to 8 characterised in that the ridges are of progressively increasing height over the length of the gasket, between adjacent bolt apertures.

FIG.1

FIG.2

FIG.3

FIG.4